# EUROPÄISCHE PATENTSCHRIFT

(11) **EP 0 769 180 B1**
(45) Veröffentlichungstag und Bekanntmachung des Hinweises auf die Patenterteilung: **02.07.2003**
(21) Anmeldenummer: 96909069.5
(22) Anmeldetag: 20.04.1996
(51) Int. Cl.: G08G 1/09

(54) **EINRICHTUNG ZUR AUFBEREITUNG UND AUSGABE VON INFORMATIONEN FÜR EINEN FAHRZEUGFÜHRER**
ARRANGEMENT FOR PREPARING AND PROVIDING INFORMATION FOR A VEHICLE DRIVER
DISPOSITIF POUR PREPARER ET FOURNIR DES INFORMATIONS DESTINEES AU CONDUCTEUR D'UN VEHICULE

(30) Priorität: 05.05.1995 DE 19516477
(43) Veröffentlichungstag der Anmeldung: 23.04.1997
(73) Patentinhaber: ROBERT BOSCH GMBH, 70442 Stuttgart (DE)
(72) Erfinder: GOSS, Stefan, D-31137 Hildesheim (DE); KELL, Dietmar, D-31199 Diekholzen (DE)
(86) Internationale Anmeldenummer: DE9600691
(87) Internationale Veröffentlichungsnummer: WO96035198

(56) Entgegenhaltungen:
- EP-A- 0 290 679
- EP-A- 0 564 353
- DE-A- 4 322 288
- FR-A- 2 651 352
- FR-A- 2 700 629

## Beschreibung

Die Erfindung betrifft eine Einrichtung zur Aufbereitung und Ausgabe von Informationen für einen Fahrzeugführer.

Mit dem Radio-Daten-System (RDS) wird eine zusätzliche und unhörbare Übermittlung von digitalen Daten parallel zu Rundfunkprogrammen in einem Datenkanal ermöglicht. Spezifikationen des Radio-Daten-Systems für UKW-Hörfunk sind unter anderem in der Druckschrift Tech. 3244 - E, März 1984 der europäischen Rundfunk-Union (EBU) festgelegt. Rundfunkempfänger mit geeigneten RDS-Decodern können übermittelte Daten zusätzlich zum Rundfunkempfang mit dem selben Empfangsteil aufnehmen und decodieren. Die Datenübertragung erfolgt in 32 Gruppen zu jeweils 104 Bit, wobei jeder Gruppe ein bestimmter Dienst zugewiesen wird. Die Gruppe 8a ist zur Übertragung von digital codierten Verkehrsmeldungen vorgesehen.

Der Aufbau und die Codierung dieser Verkehrsmeldungen sind in dem Normvorschlag ALERT C, November 1990, herausgegeben vom RDS ATT ALERT Consortium, im einzelnen festgelegt. Die wesentlichen Elemente einer Verkehrsmeldung sind dabei der Ort des Geschehens (Location) und das Ereignis (Event). Diese Angaben sind katalogisiert, das heißt, daß jedem verkehrsrelevanten Ort und jedem verkehrsrelevanten Ereignis ein eindeutiger Code zugewiesen ist. Die Verkettung der Orte in der Ortstabelle entlang existierender Straßen gibt den Verlauf wieder. Außer den üblichen Einrichtungen eines Empfangsgerätes mit einem RDS-Decoder sind zur Nutzung des Verkehrsmeldungskanals TMC (Traffic Message Channel) Einrichtungen zur Decodierung, zur Speicherung, zur Weiterverarbeitung und zur Ausgabe der Verkehrsmeldungen erforderlich.

Ferner sind Navigationssysteme bekanntgeworden, bei denen die jeweilige Position des Fahrzeugs ermittelt wird und mit Hilfe einer digital gespeicherten Straßenkarte nach Eingabe eines Fahrtziels Routenvorschläge berechnet'und angezeigt werden. Zur Positionsbestimmung können dabei Sensoren verwendet werden, welche die Bewegung des Fahrzeugs auf der Fahrbahn erfassen, sowie Satelliten-Ortungssysteme (GPS). Die berechneten Routenvorschläge können als Landkarten mit markierter vorgeschlagener Route oder als Anweisung zum Verhalten an Kreuzungen und Abzweigungen ausgegeben werden. So sind beispielsweise Navigationssysteme bekannt, bei welchen ein verschiedene Formen und Richtungen annehmendes Pfeilsymbol dem Fahrzeugführer den Weg weist. Bei den bekannten Navigationssystemen werden die Routenempfehlungen und gegebenenfalls andere Informationen jedoch lediglich aufgrund der digital gespeicherten Straßenkarte ermittelt, ohne daß Veränderungen des Straßennetzes, insbesondere temporäre Veränderungen durch Staus oder Sperrungen, berücksichtigt werden.

EP-A-0 290 679 offenbart eine Vorrichtung zum Empfang und zur Behandlung von Verkehrsnachrichten, wobei die Verkehrsnachrichten dazu dienen können, die Routenwahl zu beeinflussen. Druckschrift 1 lehrt nun, daß das Navigationssystem eine Route berechnet, die berechneten Straßen an einen Rundfunkempfänger übermittelt und nun von dem Rundfunkempfänger Informationen bezüglich dieser Straßen erhält, wenn bezüglich dieser Straßen Verkehrsnachrichten vorhanden sind. Erhält das Navigationssystem eine solche Meldung, kann eine neue Strecke berechnet werden.

DE-A-43 22 288 offenbart ein Verfahren zur Auswahl von Verkehrsmeldungen aus einer Menge empfangbarer Verkehrsmeldungen, bei dem nach Eingabe einer Fahrtroute und Bestimmug einer aktuellen Position nur diejenigen Verkehrsmeldungen ausgewählt werden, die die Fahrtroute im Bereich der ermittelten Position betreffen.

Aufgabe der vorliegenden Erfindung ist es, die Information des Fahrzeugführers im Falle von Verkehrsbehinderungen gegenüber den bekannten Einrichtungen und Systemen zu verbessern.

Diese Aufgabe wird durch eine Einrichtung mit den Merkmalen der unabhängigen Patentansprüche gelöst. Dazu sind zunachst ein Empfanger für digital codierte Verkehrsmeldungen und ein Navigationssystem, das zur Ermittlung der jeweiligen Position des Fahrzeugs und zur Berechnung von Routenempfehlungen ausgelegt ist, durch eine Einrichtung zur Datenübertragung verbunden.

Eine wichtige Maßnahme in einem Empfänger für digital codierte Verkehrsmeldungen - im folgenden auch TMC-System genannt - ist die Selektion von empfangenen Verkehrsmeldungen nach vorgegebenen Kriterien. Dieses ist einerseits für den Fahrzeugführer wichtig, um seine Aufmerksamkeit nicht durch eine Vielzahl für ihn unwichtiger Verkehrsmeldungen von denjenigen Verkehrsmeldungen abzulenken, die seine voraussichtliche Route betreffen. Andererseits ist eine Selektion der an das Navigationssystem zu übertragenden Verkehrsmeldungen zur Vermeidung einer übermäßigen Belastung des Rechners im Navigationssystem erforderlich. Bei der erfindungsgemäßen Einrichtung ist daher vorgesehen, daß das Navigationssystem aus der jeweiligen Position und einem eingegebenen Ziel Kriterien zur Selektion von zum Navigationssystem zu übertragenden Verkehrsmeldungen berechnet und an den Empfänger überträgt.

Die Wirkung von mit den Verkehrsmeldungen bekanntgegebenen Ereignissen auf die Berechnung der Routenempfehlungen kann von Ereignis zu Ereignis sehr verschieden sein. Um den Rechenaufwand im Navigationssystem nicht mit der Auswertung von nicht relevanten Ereignissen zu belasten, ist daher weiter vorgesehen, daß vom Navigationssystem ferner ein ereignisorientiertes Selektionskriterium an den Empfänger übertragen wird.

Die erfindungsgemäße Einrichtung weist den Vorteil auf, daß bei der Berechnung und Anzeige von Routenvorschlägen digital codierte Verkehrsmeldungen berücksichtigt werden. Außerdem trägt die erfindungsgemäße Einrichtung dazu bei, daß dem Fahrzeugführer nicht unnötig viele Verkehrsmeldungen angezeigt oder akustisch dargeboten werden, die für seine voraussichtliche Route nicht relevant sind.

Die erfindungsgemäße Einrichtung kann dadurch gebildet werden, daß ein an sich autarker Empfänger für digital codierte Verkehrsmeldungen und ein an sich autarkes Navigationssystem verbunden werden, beispielsweise über einen Datenbus. Es ist jedoch auch möglich, daß der Empfänger bzw. Teile des Empfängers, die zur Verwaltung, Decodierung und Ausgabe von Verkehrsmeldungen dienen, zusammen mit wesentlichen Komponenten des Navigationssystems durch verschiedene Programme in einem Prozessor realisiert werden, wobei die Übertragung der Daten im Sinne der Erfindung durch Zugriff auf einen gemeinsamen Speicher erfolgt.

Damit das Navigationssystem möglichst umgehend auf Verkehrsmeldungen reagieren kann, ist bei einer bevorzugten Ausführungsform der Erfindung vorgesehen, daß von dem Empfänger empfangene neue Verkehrsmeldungen spontan zum Navigationssystem übertragen werden.

Bei bestimmten Betriebszuständen, beispielsweise bei einer Änderung des eingegebenen Ziels oder beim Einschalten des Navigationssystems kann es jedoch vorteilhaft sein, daß die Übertragung von Verkehrsmeldungen auf Anforderung des Navigationssystems erfolgt.

Während mit Hilfe des Navigationssystems eine ausgesprochen gezielte Selektion automatisch und ebenfalls durch manuelle Eingabe möglich ist, kann eine automatische Selektion mit Hilfe des TMC-Systems aufgrund der jeweiligen Position beispielsweise derart erfolgen, daß Verkehrsmeldungen, die Orte innerhalb einer vorgegebenen Entfernung von der Position betreffen, selektiert werden. Dafür ist bei einer Weiterbildung der erfindungsgemäßen Einrichtung vorgesehen, daß das Navigationssystem die jeweilige Position zum Empfänger überträgt und daß der Empfänger Verkehrsmeldungen aufgrund der übertragenen Position selektiert.

Hierbei kann die Übertragung der jeweiligen Position nach Zurücklegen einer vorgegebenen Entfernung oder Ablauf einer vorgegebenen Zeit oder auf Abruf durch den Empfänger vom Navigationssystem zum Empfänger erfolgen.

Durch die Erzeugung von Selektionskriterien sowie durch eine Möglichkeit zur Eingabe von Selektionskriterien am Empfänger bestehen mehrere Varianten bezüglich der Selektion von auszugebenden Verkehrsmeldungen. Bei einer Ausführungsform der Erfindung ist vorgesehen, daß die Selektion von auszugebenden Verkehrsmeldungen nach einem eingegebenen Kriterium unabhängig vom Navigationssystem erfolgt.

Diese Maßnahme hat auf die Ausgabe von Verkehrsmeldungen die Wirkung, daß auch Verkehrsmeldungen ausgegeben werden, die nicht auf der jeweils vom Navigationssystem vorgeschlagenen Route liegen, daß jedoch Verkehrsmeldungen möglicherweise nicht ausgegeben werden, die auf der Route liegen. Weisen solche Verkehrsmeldungen einen Inhalt auf, der nicht das Verlassen der Route erfordert, reagiert auch das Navigationssystem nicht mit dem Anzeigen einer alternativen Route, so daß der Fahrzeugführer dann auch die Route befährt, für welche eine Verkehrsmeldung vorliegt, jedoch nicht ausgegeben wurde.

Um eine an die jeweilige Routenempfehlung angepaßte Ausgabe von Verkehrsmeldungen an den Fahrzeugführer zu ermöglichen, ist bei einer anderen Ausführungsform der Erfindung vorgesehen, daß ein Kriterium zur Selektion von auszugebenden Verkehrsmeldungen vom Navigationssystem an den Empfänger übertragen wird. Dabei kann insbesondere die Zahl der ausgegebenen Verkehrsmeldungen dadurch eingeschränkt werden, daß das Kriterium diejenigen Verkehrsmeldungen selektiert, welche die jeweilige Route betreffen, wenn keine andere Route vom Navigationssystem empfohlen werden kann. Hierbei wird allerdings ein eventuell vorhandenes Interesse des Fahrzeugführers an Verkehrsmeldungen auf anderen Routen ignoriert.

Um einem darüberhinausgehenden Informationsbedarf des Fahrzeugführers gerecht zu werden, ist bei einer dritten Ausführungsform der Erfindung vorgesehen, daß sowohl Verkehrsmeldungen nach einem eingegebenen Kriterium als auch Verkehrsmeldungen nach einem vom Navigationssystem an den Empfänger übertragenen Kriterium ausgegeben werden.

Zur Anpassung an das jeweilige Informationsbedürfnis des Fahrzeugführers kann auch vorgesehen sein, daß eine Wahlmöglichkeit durch den Fahrzeugführer besteht, ob die Selektion von Verkehrsmeldungen nach einem von ihm gewählten Kriterium oder/und nach dem vom Navigationssystem berechneten Kriterium erfolgt.

Eine vorteilhafte Weiterbildung der erfindungsgemäßen Einrichtung besteht darin, daß das Navigationssystem unter Berücksichtigung der Verkehrsmeldungen Routenempfehlungen berechnet. Dabei können Verkehrsmeldungen, welche sich auf Staus oder zähflüssigen Verkehr beziehen, in verkehrliche Widerstandswerte umgerechnet werden, die dann für verschiedene alternative Routen verglichen werden.

Vorzugsweise ist bei der erfindungsgemäßen Einrichtung vorgesehen, daß das Navigationssystem Verkehrsmeldungen decodieren kann.

Zum Decodieren der digital codierten Verkehrsmeldungen sind Orts- und Ereignislisten erforderlich, die mit denjenigen, die bei der senderseitigen Codierung verwendet wurden, übereinstimmen. Es ist daher bei einer vorteilhaften Ausgestaltung dieser Weiterbildung vorgesehen, daß das Navigationssystem über eine digital gespeicherte Straßenkarte verfügt, die außer den zur Navigation erforderlichen Daten mindestens eine zur Decodierung der Verkehrsmeldungen vorgesehene Liste von Ortscodes enthält.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: eine detailliertere Darstellung der Einrichtung nach Fig. 1,
- Fig. 3: ein Flußdiagramm zur Initialisierung nach einem Einschalten der erfindungsgemäßen Einrichtung,
- Fig. 4: ein Flußdiagramm zur Erläuterung des Empfangs und der Weiterleitung von Verkehrsmeldungen an das Navigationssystem,
- Fig. 5: ein Flußdiagramm zur Erläuterung der Übertragung von Verkehrsmeldungen an das Navigationssystem bei einer neuen Position oder bei einem neuen Selektionskriterium und
- Fig. 6: ein Flußdiagramm zur dynamischen Routenempfehlung durch das Navigationssystem.

Gleiche Teile sind in den Figuren mit gleichen Bezugszeichen versehen.

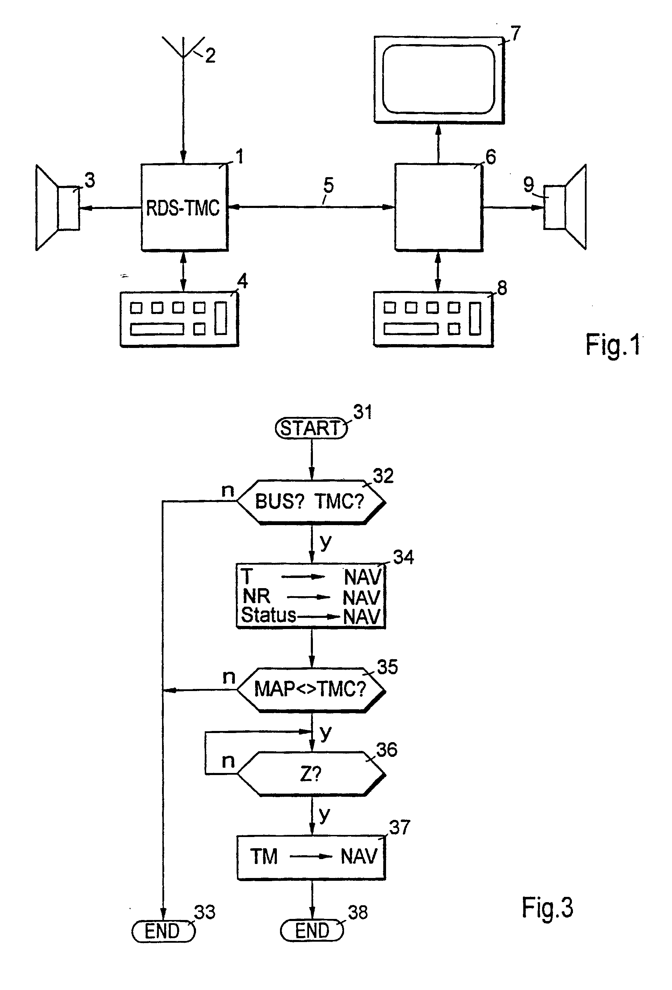

Bei der Einrichtung nach Fig. 1 ist ein Rundfunkempfänger 1 mit einer im einzelnen nicht dargestellten Einrichtung zum Decodieren von RDS-Signalen und einer Einrichtung zum Decodieren und zum Verwalten von in den RDS-Signalen enthaltenen Verkehrsmeldungen ausgestattet. Die Einrichtung wird im folgenden TMC-System genannt. Sofern die über eine Antenne 2 empfangenen Sender RDS-Signale mit digitalen Verkehrsmeldungen (Traffic Message = TM) enthalten, werden diese decodiert und über einen Lautsprecher 3 mit Hilfe von Sprachsynthese ausgegeben. Eine Bedieneinheit 4 ermöglicht neben der Bedienung des Rundfunkempfängers eine Bedienung des TMC-Systems, um beispielsweise eingehende Meldungen nach vorgegebenen Kriterien zu selektieren oder bereits zuvor ausgegebene Meldungen sich nochmals ausgeben zu lassen.

Das TMC-System im Rundfunkempfänger 1 ist über einen Datenbus 5 mit einem Navigationssystem 6 verbunden. An das Navigationssystem 6 sind eine Anzeigevorrichtung 7, eine Bedieneinheit 8 und ein Lautsprecher 9 angeschlossen. Das Navigationssystem selbst enthält geeignete Sensoren zur Ermittlung der jeweiligen Position (Ortung), einen Massespeicher für Straßenkarten und einen Rechner, der aus der jeweiligen Position und einem eingegebenen Ziel eine Routenempfehlung berechnet und diese dem Benutzer mit Hilfe der Anzeigevorrichtung 7 darstellt. Dieses kann bei bekannten Navigationssystemen durch die Darstellung einer Landkarte mit hervorgehobener Route oder durch Anweisungen zum Verhalten an Kreuzungen und Abzweigungen erfolgen - beispielsweise durch Pfeilsymbole für Geradeaus, Links, Rechts usw. Durch den Lautsprecher 9 kann eine verbale Unterstützung der Anweisungen vorgenommen werden. Ansonsten sind derartige Navigationssysteme in vielfältiger Weise beschrieben, eine einzelne Erläuterung erübrigt sich daher im Zusammenhang mit der vorliegenden Erfindung.

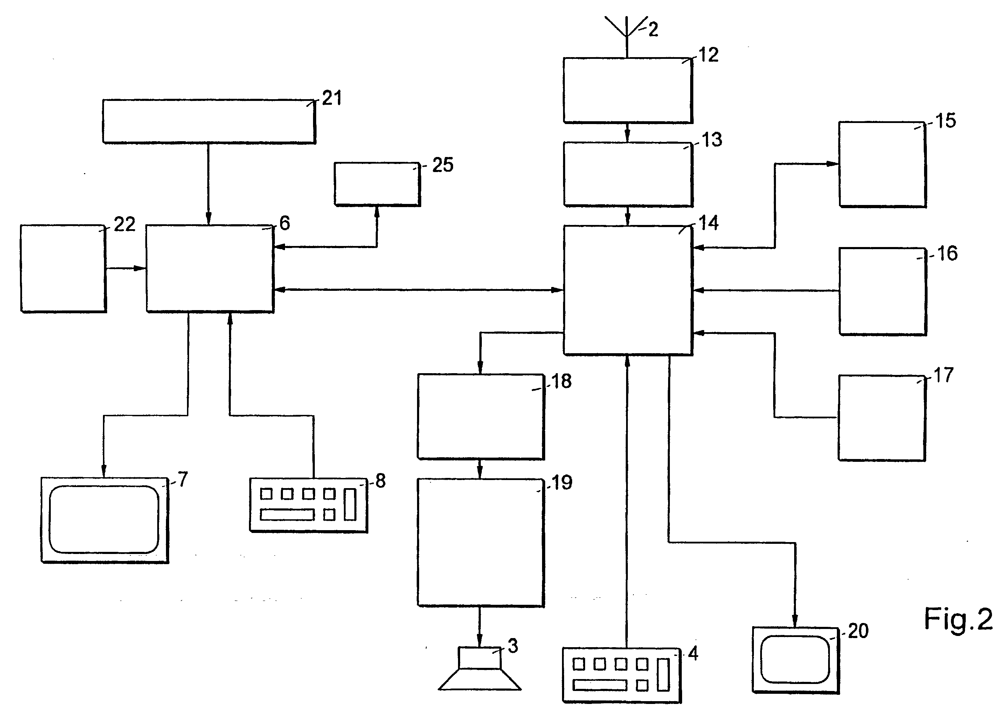

Bei der in Fig. 2 dargestellten Einrichtung werden die hochfrequenten Signale von der Antenne 1 einem Empfangsteil 12 zugeführt, von dem die niederfrequenten Signale einem RDS-Decoder 13 zugeleitet werden. Aus dem decodierten RDS-Signal wird das TMC-Siganl entnommen und einem TMC-Decoder 14 zugeleitet. In einem Speicher 15 wird für jede neu empfangene Verkehrsmeldung ein Speicherplatz reserviert, der das Meldungselement mit folgenden Informationen aufnimmt:

| Datum: | Erläuterung: |
|---|---|
| LOC1 | empfangener Ortscode 1 |
| LOC2 | entsprechend dem übertragenen Ausmaß ermittelter Ortscode 2 |
| Event-Code | Ereignis-Code |
| Diversion | Ja/Nein-Information, ob über TMC Umleitungsinformation gegeben wurde |
| Event-Dir | Angabe, ob Ereignis uni- oder bidirektional ist |
| Zeitangabe | in Stunden und Minuten |
| OSM/MSM | Angabe, ob TMC-Einsequenz oder Mehrsequenz-Meldung vorliegt /2/ |
| freeformat | Freiformat, daß sämtliche Meldungsinhalte einer Mehrsequenzmeldung, 2. bis 5. Sequenz enthält |
| Start-Zeit | Angabe, ab welchem Zeitpunkt das Ereignis gültig ist |
| Stop-Zeit | Angabe, ab welchem Zeitpunkt das Ereignis ungültig ist |
| DatabaseNumber | um den country code erweiterte TMC-Datenbanknummer |

Diese Informationen werden mit Hilfe einer Ortsliste 16 und einer Ereignisliste 17 zu einer Ausgabe decodiert. In der Ortsliste 16 befinden sich beispielsweise folgende Angaben, wobei Loc. = Location für Ort steht:

| Datum: | Erläuterung: | Beispiel: |
|---|---|---|
| Loc.-Code | ist der übertragene Zahlencode | 1, 2,..2000,.. |
| Loc.-Type | beschreibt den Typ des Ortes | Punkt, Gebiet, Straßensegment |
| offset+ | Referenz zum Loc.-Code des vorhergehenden Punktes oder Segmentes entlang einer Straße | vorherige Autobahn-Anschlußstelle |
| offset- | Referenz zum Loc.-Code des nachfolgenden Punktes oder Segmentes entlang einer Straße | nachfolgende Autobahn-Anschlußstelle |
| RefL | wenn Punkt-Loc.: Referenz zum Loc.-Code des zugehörigen Straßensegmentes | |
| RefA | wenn Punkt-Loc.: Referenz zum Loc.-Code des zugehörigen Gebietes | |
| Country-Code | Country-Code gemäß /1/ | definiert, für welches Land Europas der Loc.-Code gilt |
| DB-Code | Data-Base-Nr. /1/ | definiert für das entsprechende Land die Nr. der Loc.-Tabelle |

Außerdem befinden sich in der Ortsliste 16 noch Angaben, welche die decodierte Verkehrsmeldung in einen geschriebenen oder gesprochenen Text umwandeln. Diese sind in einer ebenfalls bei 16 abgelegten Liste der folgenden Art enthalten:

| Datum: | Beschreibung: | Beispiel: |
|---|---|---|
| Roaddescription | Typ einer Straße | A1=Autobahn1, A5(M1) |
| Roadname | spezifischer Name | Kölner Ring, |
| Loc-Sub-Type | Zusatzbeschreibung zum Loc.-Type | z.B. bei Punkt: Autobahnkreuz, Dreieck,.. |
| Name1 | Name des Ortes | z.B. Hildesheim Drispenstedt |
| Name2 | 2. Name des Ortes | nur bei Straßensegment (Endpunkt) |
| Koordinate (geogr. Länge und Breite) | geographische Koordinaten zur Kartendarstellung | Grad, Minuten, Sekunden |

Verkehrsmeldungen, die dem Benutzer präsentiert werden sollen, können mittels eines synthetischen Sprachgenerators 18, eines Verstärkers 19 und des Lautsprechers 3 ausgegeben werden. Außerdem ist das TMC-System an eine Bedieneinheit 4 und eine Anzeigevorrichtung (Display) 20 angeschlossen. Mit der Bedieneinheit 4 kann der Benutzer beispielsweise Selektionskriterien für Verkehrsmeldungen eingeben, so daß ihm beispielsweise nur diejenigen Verkehrsmeldungen ausgegeben werden, die auf seiner Route liegen. Mit der Anzeigevorrichtung 20 können die Bedienvorgänge dargestellt oder auch Verkehrsmeldungen schriftlich präsentiert werden.

Das Navigationssystem 6 mit einer Anzeigevorrichtung 7 und einer Bedieneinheit 8 ist über den Datenbus 5 an das TMC-System angeschlossen. Weitere an das Navigationssystem 6 angeschlossene Komponenten sind Sensoren 21, beispielsweise ein GPS-Empfänger, ein Speicher 22 für eine Straßenkarte, welche neben den für das Navigationssystem 6 erforderlichen Informationen auch Informationen für das TMC-System enthält, und ein Arbeitsspeicher 25 zur Zwischenspeicherung von Verkehrsmeldungen und anderen Ergebnissen der Routenplanung.

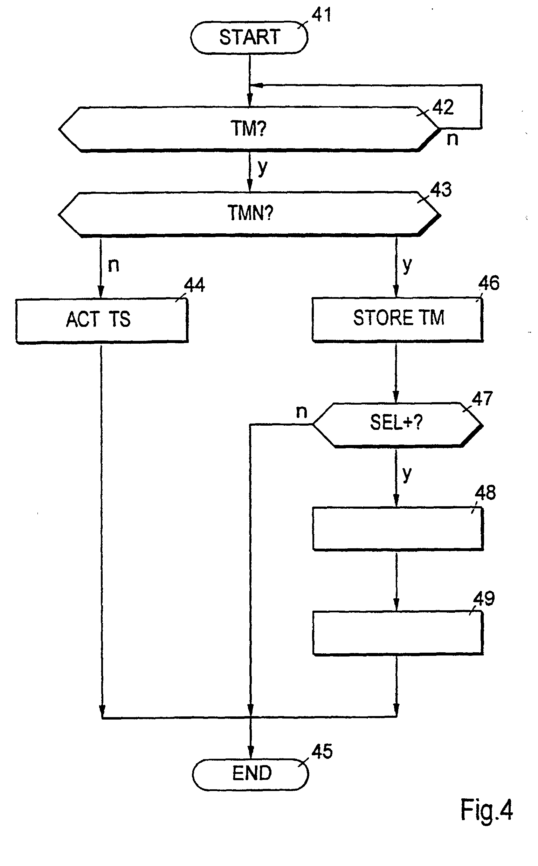

Fig. 3 zeigt die wesentlichen Schritte einer Initialisierung des TMC-Systems und des Navigationssystems, soweit der Datenaustausch zwischen beiden Systemen betroffen ist. Nach einem Start bei 31 wird bei 32 vom Navigationssystem abgefragt, ob am Navigationssystem 6 (Fig. 2) der Datenbus 5 und das TMC-System 14 angeschlossen sind. Ist dieses nicht der Fall, wird die Initialisierung abgebrochen und das Programm bei 33 beendet. Das Navigationssystem kann dann zwar seine übrigen Aufgaben erfüllen, jedoch ohne Unterstützung durch das TMC-System.

Sind der Datenbus und das TMC-System angeschlossen, erfolgt bei 34 eine Übertragung von Initialisierungsdaten vom TMC-System zum Navigationssystem NAV, insbesondere der Uhrzeit T, der Nummer NR bzw. mehreren Nummern von im TMC-System gespeicherten Ortslisten und einer Statusmeldung. Letztere beschreibt den Status des TMC-Systems, beispielsweise ob Verkehrsmeldungen gespeichert sind oder nicht.

Im Programmteil 35 wird geprüft, ob die zum Navigationssystem übertragenen Nummern NR von Ortslisten und TMC-Ortscodes auf der digitalen Straßenkarte MAP des Navigationssystems korrespondieren. Ist dieses nicht der Fall, so ist ein Zusammenspiel zwischen dem Navigationssystem und dem TMC-System ebenfalls nicht möglich, so daß die Initialisierung bei 33 beendet wird. Sind jedoch geeignete Ortscodes auf der digitalen Straßenkarte des Navigationssystems vorhanden, wird bei 36 geprüft, ob der Benutzer ein Fahrtziel Z eingegeben hat. Ist dieses der Fall, erfolgt bei 37 der Start der Übertragung der vorhandenen Verkehrsmeldungen an das Navigationssystem. Danach wird bei 38 die Initialisierung beendet.

Fig. 4 zeigt den Ablauf der Datenübertragung über den Datenbus 5 (Fig. 1) im Falle des Empfangs einer neuen Verkehrsmeldung. Das Programm wird bei 41 gestartet und durchläuft eine Schleife bei 42, bis eine Verkehrsmeldung empfangen wird. Im Anschluß daran wird im TMC-System bei 43 geprüft, ob die Verkehrsmeldung neu ist (TMN) oder ob es sich um eine Wiederholung einer bereits früher empfangenen Verkehrsmeldung handelt. Ist die Verkehrsmeldung nicht neu, wird bei 44 deren zusammen mit der Verkehrsmeldung im Speicher 15 (Fig. 2) gespeicherter Zeitstempel aktualisiert (ACT TS) und das Programm bei 45 beendet.

Ist jedoch bei 43 die Verkehrsmeldung neu, wird sie bei 46 im Speicher 15 (Fig. 2) abgelegt. Danach wird bei 47 geprüft, ob das jeweils gültige Selektionskriterium erfüllt ist (SEL+). Trifft dieses nicht zu, wird das Programm bei 45 ohne weitere Maßnahmen beendet. Ist jedoch das Selektionskriterium erfüllt, erfolgt im Programmteil 48 eine Übertragung der Verkehrsmeldung zum Navigationssystem. Danach wird die Verkehrsmeldung als automatisch ausgegeben gekennzeichnet (49) und das Programm bei 45 beendet.

Das Navigationssystem ist in der Lage, die gemäß 48 übertragenen Verkehrsmeldungen zu verarbeiten und insbesondere bei der Berechnung von Routenempfehlungen zu berücksichtigen. Um jedoch nur diejenigen Verkehrsmeldungen verarbeiten zu müssen, die für die Berechnung von Routenempfehlungen aufgrund der jeweiligen Position und des eingegebenen Ziels relevant sind, überträgt das Navigationssystem neue Positionen und neue Selektionskriterien an das TMC-System. Die Übertragung der jeweils neuen Position kann dabei in vorgegebenen Zeitabschnitten oder nach vorgegebenen Entfernungen erfolgen.

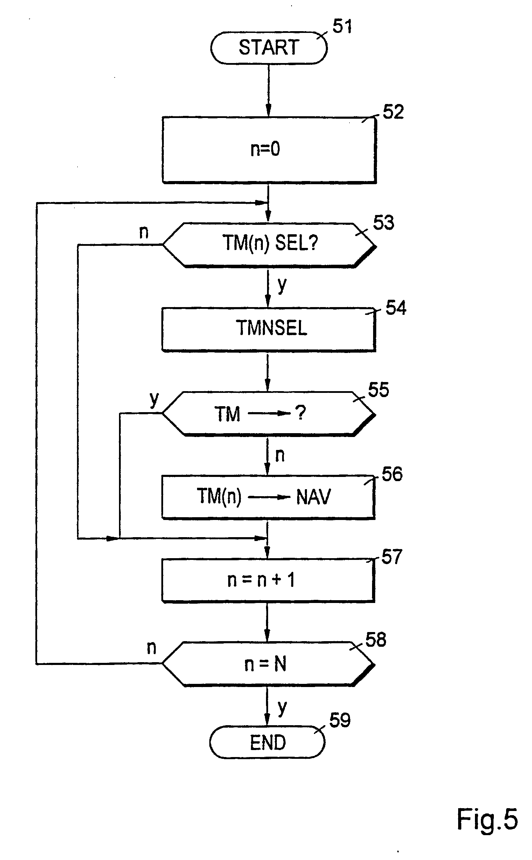

Durch eine Meldung der neuen Position oder des neuen Selektionskriteriums an das TMC-System an sich würden lediglich neu eintreffende TMC-Meldungen entsprechend selektiert an das Navigationssystem übertragen werden. Es können jedoch Verkehrsmeldungen, die vor Änderung des Selektionskriteriums bzw. bei der vorherigen Position nicht relevant waren, für die Berechnung der Routenempfehlung Bedeutung erlangen. Deshalb werden bei jeder neuen Position und bei jedem neuen Selektionskriterium eine neue Selektion und gegebenenfalls eine Übertragung der gespeicherten Verkehrsmeldungen an das Navigationssystem gemäß Fig. 5 durchgeführt. Nach einem Start bei 51 wird bei 52 ein Zähler n auf 0 gesetzt.

Bei 53 erfolgt eine Verzweigung in Abhängigkeit davon, ob die Verkehrsmeldung TM(n) dem neuen Selektionskriterium genügt. Ist dieses der Fall, wird die Verkehrsmeldung bei 54 entsprechend gekennzeichnet. Danach erfolgt eine Verzweigung 55 in Abhängigkeit davon, ob die Verkehrsmeldung bereits einmal ausgegeben bzw. an das Navigationssystem übertragen wurde. Ist dieses nicht der Fall, erfolgt bei 56 die Übertragung an das Navigationssystem. Danach, bei einer bereits früher ausgegebenen Verkehrsmeldung und bei nicht erfülltem Selektionskriterium bei 53 wird bei 57 der Zähler n inkrementiert. Im Anschluß daran wird bei 58 geprüft, ob der Zähler n die gesamte Anzahl N der Verkehrsmeldungen erreicht hat. Solange dieses nicht der Fall ist, wird das Programm, beginnend mit der Verzweigung 53, wiederholt. Ist dieses der Fall, wird das Programm bei 59 beendet.

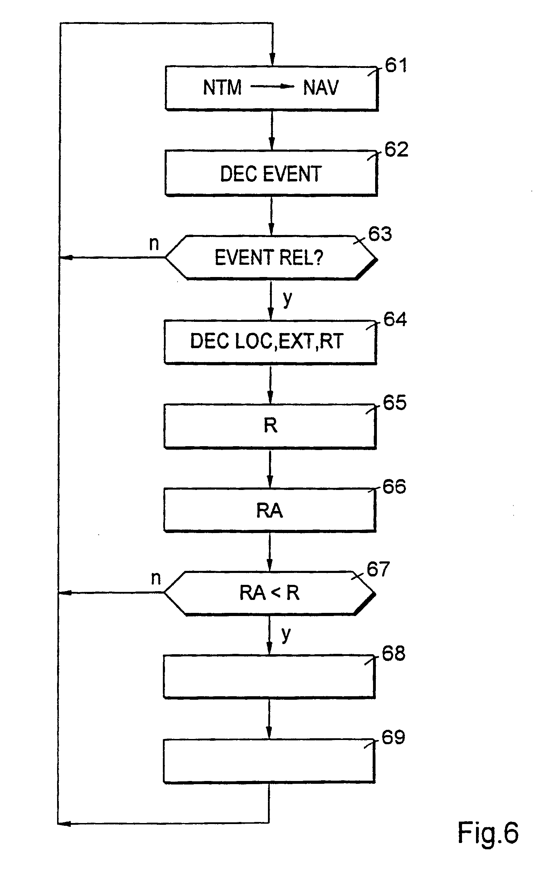

Fig. 6 zeigt ein Beispiel für die Ableitung einer dynamischen Routenempfehlung durch das Navigationssystem. Bei 61 empfängt das Navigationssystem NAV die Verkehrsmeldung TM vom TMC-System TMC, worauf bei 62 das in der Verkehrsmeldung enthaltene Ereignis decodiert wird (DEC EVENT). Bei 63 wird dann geprüft, ob das Ereignis für die Berechnung einer Route relevant ist (EVENT REL?). So sind beispielsweise Wettermeldungen in der Regel kein Grund für das Abweichen einer zunächst empfohlenen Route, während Staus häufig dazu Anlaß geben. Ist das Ereignis relevant, erfolgt bei 64 eine Decodierung der Orte LOC, der Streckenlänge EXT und des Straßentyps RT. Während die Codierung der Verkehrsmeldungen TM im wesentlichen auf die Codierung ausgewählter Orte, beispielsweise Straßenkreuzungen, Autobahnanschlußstellen, Autobahnkreuzungen und Ortschaften abgestützt ist, liegen dem Navigationssystem Informationen in Form von Straßenkarten vor. Deshalb wird bei 64 auch eine Umsetzung von verschiedenen Informationen vorgenommen. So wird' beispielsweise ein mit einer Verkehrsmeldung durch Angabe der betroffenen Orte übermitteltes Ausmaß in einen Kilometerwert umgerechnet.

Bei 65 erfolgt für die zunächst vorgesehene Route unter Berücksichtigung der Verkehrsmeldung die Berechnung eines verkehrlichen Widerstandswertes R. Bei 66 wird der verkehrliche Widerstandswert RA alternativer Routen berechnet. Ist bei 67 der Widerstandswert RA der günstigsten alternativen Route kleiner als der Widerstandswert R der zunächst vorgesehenen Route, wird bei 68 die günstigste alternative Route empfohlen. So wird beispielsweise der Benutzer durch eine geeignete Darstellung auf der Anzeigevorrichtung 7 (Fig. 2) zum Abbiegen aufgefordert. Außerdem wird bei 69 der Benutzer durch eine Sprachausgabe auf die Routenänderung aufmerksam gemacht, wobei gegebenenfalls eine spätere Ausgabe von Verkehrsmeldungen, die sich auf die zunächst vorgesehene Route beziehen, unterdrückt wird.

Ist jedoch keiner der verkehrlichen Widerstandswerte RA der alternativen Routen geringer als der verkehrliche Widerstandswert R der zunächst vorgesehenen Route, erfolgt keine Änderung der Routenempfehlung, sondern eine Wiederholung des Programms, beginnend bei 61.

## Patentansprüche

1. Einrichtung zur Aufbereitung und Ausgabe von Informationen für einen Fahrzeugführer, wobei ein Empfänger (1, 14) für digital codierte Verkehrsmeldungen und ein Navigationssystem (6), das zur Ermittlung der jeweiligen Position des Fahrzeugs und zur Berechnung von Routenempfehlungen ausgelegt ist, durch eine Einrichtung (5) zur Datenübertragung verbunden sind, **dadurch gekennzeichnet, dass** das Navigationssystem (6) aus der jeweiligen Position und einem eingegebenen Ziel Kriterien zur Selektion von zum Navigationssystem (6) zu übertragenden Verkehrsmeldungen berechnet und an den Empfänger (1, 14) überträgt, und dass das Navigationssystem zusätzlich ein weiteres Selektionskriterium zur Selektion von zum Navigationssystem (6) zu übertragenden Verkehrsmeldungen an den Empfänger (1, 14) überträgt, welches eine Selektion anhand in den Verkehrsmeldüngen enthaltener Ereignisse ermöglicht.

2. Einrichtung nach Anspruch 1, **dadurch gekennzeichnet, dass** von dem Empfänger (1, 14) empfangene neue Verkehrsmeldungen spontan zum Navigationssystem übertragen werden.

3. Einrichtung nach einem der Ansprüche 1 oder 2, **dadurch gekennzeichnet, dass** die Übertragung von Verkehrsmeldungen auf Anforderung des Navigationssystems (6) erfolgt.

4. Einrichtung nach einem der vorhergehenden Ansprüche, **dadurch gekennzeichnet, dass** sowohl Verkehrsmeldungen nach einem eingegebenen Kriterium als auch Verkehrsmeldungen nach einem vom Navigationssystem an den Empfänger übertragenen Kriterium ausgegeben werden.

5. Einrichtung nach einem der vorhergehenden Ansprüche, **dadurch gekennzeichnet, dass** eine Wahlmöglichkeit durch den Fahrzeugführer besteht, ob die Selektion von Verkehrsmeldungen nach einem von ihm gewählten Kriterium oder/und nach dem vom Navigationssystem (6) berechneten Kriterium erfolgt.

6. Einrichtung nach einem der vorhergehenden Ansprüche, **dadurch gekennzeichnet, dass** das Navigationssystem (6) unter Berücksichtigung der Verkehrsmeldungen Routenempfehlungen berechnet.

7. Einrichtung nach einem der vorhergehenden Ansprüche, **dadurch gekennzeichnet, dass** das Navigationssystem (6) Verkehrsmeldungen decodieren kann.

8. Einrichtung nach Anspruch 7, **dadurch gekennzeichnet, dass** das Navigationssystem (6) über eine digital gespeicherte Straßenkarte verfügt, die außer den zur Navigation erforderlichen Daten mindestens eine zur Decodierung der Verkehrsmeldungen vorgesehene Liste von Ortscodes enthält.

## Claims

1. Device for conditioning and outputting information for a vehicle driver, where a receiver (1, 14) for digitally coded traffic reports and a navigation system (6), which is designed to ascertain the respective position of the vehicle and to calculate route recommendations, are connected by a device (5) for data transmission, **characterized in that** the navigation system (6) uses the respective position and an entered destination to calculate criteria for selecting traffic reports which are to be transmitted to the navigation system (6) and transmits them to the receiver (1, 14), and **in that** the navigation system additionally transmits to the receiver (1, 14) a further selection criterion for selecting traffic reports to be transmitted to the navigation system (6), said selection criterion allowing a selection on the basis of events contained in the traffic reports.

2. Device according to Claim 1, **characterized in that** new traffic reports received by the receiver (1, 14) are transmitted to the navigation system spontaneously.

3. Device according to one of Claims 1 or 2, **characterized in that** traffic reports are transmitted at the request of the navigation system (6).

4. Device according to one of the preceding claims, **characterized in that** both traffic reports based on an entered criterion and traffic reports based on a criterion transmitted from the navigation system to the receiver are output.

5. Device according to one of the preceding claims, **characterized in that** the vehicle driver has the option of choosing whether traffic reports are selected on the basis of a criterion which he has chosen and/or on the basis of the criterion calculated by the navigation system (6).

6. Device according to one of the preceding claims, **characterized in that** the navigation system (6) calculates route recommendations taking into account the traffic reports.

7. Device according to one of the preceding claims, **characterized in that** the navigation system (6) can decode traffic reports.

8. Device according to Claim 7, **characterized in that** the navigation system (6) has a digitally stored road map which contains not only the data required for navigation but also at least one list of location codes which is provided for decoding the traffic reports.

## Revendications

1. Installation pour préparer et émettre des informations destinées à un conducteur,
un récepteur (1, 14) étant prévu pour des messages de circulation ou en codage numérique et un système de navigation (6) pour déterminer la position respective du véhicule et pour calculer le trajet recommandé, en étant relié à une installation (5) pour transmettre des données,
**caractérisée en ce que**
le système de navigation (6) calcule à partir de la position respective et d'une destination introduite, des critères de sélection pour des messages de circulation à transmettre au système de navigation (6) et transmet ces critères au récepteur (1, 14),
et le système de navigation transmet un autre critère de sélection au récepteur (1, 14) pour sélectionner des messages de circulation à transmettre au système de navigation (6), permettant une sélection d'événements contenus dans les messages de circulation.

2. Installation selon la revendication 1,
**caractérisée en ce que**
les nouveaux messages de circulation reçus par le récepteur (1, 14) sont transmis spontanément au système de navigation.

3. Installation selon l'une des revendications 1 ou 2,
**caractérisée en ce que**
la transmission de messages de circulation se fait à la requête du système de navigation (6).

4. Installation selon l'une des revendications précédentes,
**caractérisée en ce qu'**
on émet à la fois des messages de circulation selon un critère introduit et des messages de circulation selon un critère transmis au récepteur par le système de navigation.

5. Installation selon l'une des revendications précédentes,
**caractérisée**
**par** une possibilité de sélection par le conducteur consistant en ce que la sélection des messages de circulation se fasse selon un critère choisi par lui ou/et selon un critère calculé par le système de navigation (6).

6. Installation selon l'une des revendications précédentes,
**caractérisée en ce que**
le système de navigation (6) calcule des trajets recommandés en tenant compte des messages de circulation.

7. Installation selon l'une des revendications précédentes,
**caractérisée en ce que**
le système de navigation (6) peut décoder des messages de circulation.

8. Installation selon la revendication 7,
**caractérisée en ce que**
le système de navigation (6) dispose d'une carte routière numérique en mémoire qui contient en plus des données nécessaires à la navigation, au moins une liste de codes de lieux prévue pour décoder les messages de circulation.
